# EUROPEAN PATENT SPECIFICATION

(11) **EP 2 398 630 B1**
(45) Date of publication and mention of the grant of the patent: **12.10.2016**
(21) Application number: 10705145.0
(22) Date of filing: 17.02.2010
(51) Int. Cl.: B29C 44/34, B29C 44/42, F25D 23/06, B29L 31/00, B29K 75/00, B29K 105/04

(54) **VACUUM-ASSISTED FOAMING METHOD AND APPARATUS FOR MOULDING INSULATION OF REFRIGERATION CONTAINERS**
VAKUUMUNTERSTÜTZTES SCHÄUMUNGSVERFAHREN UND VORRICHTUNG ZUM FORMEN EINER ISOLIERUNG VON KÜHLBEHÄLTERN
PROCÉDÉ DE PRODUCTION DE MOUSSE ASSISTÉE PAR VACUUM, ET APPAREIL DE MOULAGE DE L'ISOLATION D'ENCEINTES DE RÉFRIGÉRATION

(30) Priority: 20.02.2009 IT MI20090238
(43) Date of publication of application: 28.12.2011
(73) Proprietor: Cannon Ergos S.P.A., 20121 Milan (IT)
(72) Inventor: CORRADI, Piero, I-20081 Abbiategrasso (IT); DE ROSSI, Claudio, I-20081 Abbiategrasso (IT)
(74) Representative: Coloberti, Luigi
(86) International application number: PCT/EP2010/052000
(87) International publication number: WO 2010/094715

(56) References cited:
- DE-A1- 19 853 442
- JP-A- 2001 147 079
- US-A1- 2007 254 139
- US-A1- 2008 029 921
- US-A1- 2008 284 051
- US-A1- 2008 315 533

## Description

### BACKGROUND OF THE INVENTION

The invention refers to a foaming method according to claim 1 and an apparatus for moulding according to claim 7 under vacuum condition insulations of refrigeration containers, such as cabinets for home and industrial refrigerator cabinets, freezers, refrigerated display cases and refrigerated counters for foodstuffs, according to which a foamable polyurethane mixture is injected under vacuum condition into hollow walls of a refrigeration container enclosed into a foaming cell of extremely reduced space.

### STATE OF THE ART

A refrigeration container to preserve and/or display foodstuffs, usually comprises outer and inner shells which in an assembled condition define the hollow walls of the container, in which an insulation layer is moulded by injecting a heat insulating and foamable material, such as a reactive polyurethane mixture suitable to foam and expand inside the hollow walls. During the expansion, the polyurethane foam will tend to urge against the inner surfaces of the hollow walls of the container, and to outwardly bulge the shells; to this purpose both shells of the container, in an assembled condition, must be enclosed into a shore apparatus usually referred to as "foaming jig".

A conventional foaming apparatus hereinafter also referred to as foaming jig, for example of the type described in utility model IT-A-192708 of the same applicant, or in DE-A-19853442, comprises bottom and side shore panels movably arranged to come into contact with the outer shell of a refrigeration container such as a cabinet of a refrigerator, and an internal shore member which conforms to the inner shell of the container enclosed in a foaming jig. The internal shore member, hereinafter also referred to as "plug member", is removably fastened to a support structure to be removed and replaced with another plug member of a different type when, due to production requirements, it is necessary to change the model or type of container to be foamed among a same processing line.

The side shore panels and the shore plug member are arranged on a support frame, while the bottom shore panel is arranged on a support table which is vertically mobile between a lower position to open the foaming jig, in which a refrigeration container to be foamed may be positioned and in which an already foamed container may be removed, and a raised position to close the jig, in which the side shore panels and the shore plug member are made to come in contact with the external and internal surfaces of the walls of the container before injection and foaming of the polyurethane mixture take place.

Similar foaming apparatus generally are part of a complex processing plant for mass production of refrigeration containers, in which the foaming of the polyurethane mixture takes place at atmospheric pressure.

One of the greatest problems involved by a foaming apparatus of known type, relates to the "model change", i.e. a problem consequent upon passing from moulding the insulation of one type of refrigeration container to another one having a different shape and/or dimensions; at each model change, the plug member must be removed and replaced with another one conformed to the cavity of the new refrigeration container to be foamed, after which the resetting of the entire apparatus must be performed; this all requires special equipment, the presence of several experienced operators and lengthy intervention times, with consequent limitation of productivity of the entire processing plant.

In order to partially solve this problem, US-A-4,664,614 of the same applicant, suggests the use of a foaming apparatus comprising a rotatable support drum provided with two or more plug members of different shapes, and/or dimensions, which are angularly spaced apart and may be selectively positioned in a working condition by a step rotation of the support drum; by a similar foaming apparatus, it has been possible to substantially reduce the length of the entire production cycle, while maintaining all the advantages of a foaming apparatus of conventional type.

In this case as well, the injection step of the liquid polyurethane mixture into the hollow walls of a refrigeration container, and the subsequent expansion of the polyurethane foam, take place at atmospheric pressure, to allow the air into the hollow walls of the container to be vented through openings in the shells of the container, and through the foaming apparatus itself.

Since expansion of the polyurethane foam is mainly linked to the reactivity of the chemical components, the time required to expand and fill the hollow walls of the container completely influences the operative cycle.

In order to further improve the production process, US 2008/0284051 A, WO-A-2006/013002 and WO-A-2006/013004 of the same applicant, suggested to enclose the entire foaming apparatus into a large vacuum chamber for exhausting air or gas from the enclosed space of the same vacuum chamber and the hollow walls of a refrigeration container, to a desired degree of vacuum suitable to assist the foaming.

Although a foaming apparatus of this type has proved to be suitable for the contemplated use, several limits came to light during tests, in terms both of mechanical design of the apparatus and foaming process.

Since the volume of air to be sucked and exhausted from the vacuum chamber is comparatively high in respect to the volume of air to be exhausted from the hollow walls of the container, this solution, besides requiring a sturdy structure and a high cost, involves also a high consumption of energy necessary to suck a large quantity of air to reach a required vacuum condition or vacuum degree. The large volume of air to be sucked to reach a desired vacuum condition, leads in turn to an undesirable increase in the processing time and, consequently, the entire operative cycle. There are currently no solutions to these problems; therefore a need to further improve this technology still exists.

### OBJECTS OF THE INVENTION

A general object of the invention is to provide a method and an apparatus for vacuum assisted foaming, that is for foaming under vacuum condition and moulding an insulation of polyurethane material into hollow walls of containers for food such as refrigerator cabinets, freezers and similar refrigeration containers, by which it is possible to considerably reduce the volume of air to be sucked to generate vacuum, obtaining a considerably saving in energy, and reduction of the working time.

A further object of the invention is to provide a new solution for a foaming apparatus of comparatively reduced dimensions and cost, which can be used both for newly designed foaming apparatus, and for retrofitting an existing conventional foaming apparatus, improving their performance.

A further object is to provide a solution which can be suitable both for a foaming apparatus provided with a single plug member, of the type described in IT-A-192708 or DE-A-19853442, or an apparatus provided with two or more plug members fastened to a rotary drum, as described in US-A-4,664,614, as well as to an apparatus in which two or more foaming apparatuses are fastened to a rotary structure to be moved along a circular path as described in WO-A-2006/013002.

### BRIEF DESCRIPTION OF THE INVENTION

These and further objects of the invention may be achieved by a vacuum-assisted foaming method according to claim 1, and by a vacuum-assisted foaming apparatus comprising at least one foaming cell according to claim 7.

In general terms, the problem has been solved by enclosing a refrigeration container having peripheral hollow walls, into a foaming cell of extremely reduced space, basically corresponding to the air volume of the refrigeration container to be foamed, or slightly higher; in this way, it is possible to considerably reduce the volume of air to be sucked for generation of a required vacuum degree, with consequent energy saving, reducing at the same time the dimensions and cost of the foaming apparatus compared to a foaming apparatus of conventional type.

The foaming cell comprises shore side panels, conforming to the surface of the walls of the refrigeration container, and a shore plug member conforming to the inner surface of said walls fastened to a closure lid, as well as a vertically movable bottom table for supporting the refrigeration container to be foamed, the shore side panels and the shore plug member being movable between an open and a closed condition of the foaming cell; and sealing means provided between opposite contact surfaces of the side panels, the bottom table and the upper lid, in the closed condition of the foaming cell.

### BRIEF DESCRIPTION OF THE DRAWING

These and further objects and characteristics of the vacuum-assisted foaming method and foaming apparatus according to the invention, and some embodiments thereof, will be more clear from the following description with reference to the drawings, in which:
Figure 1 is a detail of an upper part of a refrigeration cabinet;
Figure 2 is a longitudinal sectional view of a foaming cell according to the invention, in a closed condition;
Figure 3 is a cross-sectional view according to line 3-3 of figure 2, of the foaming cell in the closed condition;
Figure 4 is a cross-sectional view similar to figure 3, of the foaming cell in an open condition;
Figure 5 is an enlarged detail of the seal between opposite contact surfaces of a cross shore panel and the upper closure lid;
Figure 6 is an enlarged detail of the seal between opposite contact surfaces of a longitudinal shore panel and the upper closure lid;
Figure 7 is an enlarged detail of the seal between opposite contact surfaces of shore panels;
Figure 8 is an enlarged detail of the seal between opposite contact surfaces of a longitudinal shore panel and the bottom table;
Figure 9 is a cross-sectional view of an apparatus comprising a single foaming cell and two shore plug members fastened to a rotary drum;
Figure 10 is cross-sectional view of an apparatus comprising two foaming cells and respective shore plug members fastened to a rotary drum;
Figure 11 shows an enlarged detail of figure 2;
Figure 12 is a graph showing the operative method of a foaming cell according to the invention.

### DETAILED DESCRIPTION OF THE INVENTION

The invention will be now explained making reference to the foaming under vacuum condition of a refrigeration container consisting of the cabinet for a refrigerator, being understood that what will be described for a refrigerator cabinet, will be valid also for any type of refrigeration container of the type previously referred to.

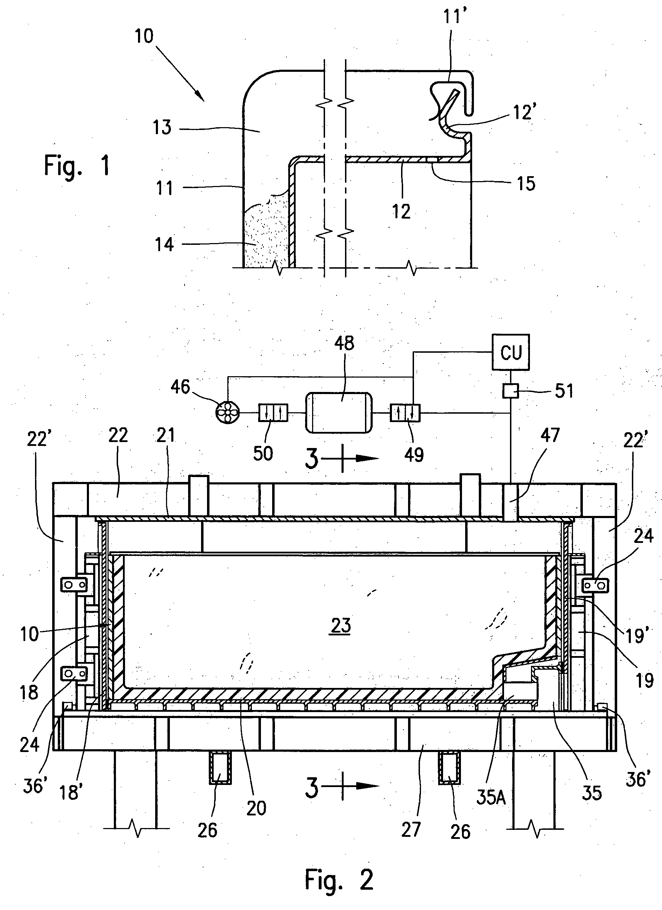

Figure 1 shows, by way of example, the upper part of a refrigerator cabinet 10, comprising an external metal shell 11, and an internal shell 12 obtained for example by thermoforming sheets of plastic material, or by shaping metal sheets.

The two shells 11 and 12, as shown in the detail of figure 1, have their peripheral edges 11' and 12' duly shaped and engaged with each other, to maintain the shells 11 e 12 in an assembled condition in which they define the hollow walls 13 of the refrigerator cabinet 10. In a manner per se known by a suitable foaming process, a metered quantity of a liquid polyurethane mixture is injected into the hollow walls 13 of the refrigerator cabinet 10, which chemically reacts and progressively expands to completely fill the hollow walls 13 of the refrigerator cabinet 10, providing a moulded heat-insulating foam layer 14 of polyurethane material. Since the expansion of the foam, and therefore the time it takes to fill the hollow walls 13 of the refrigerator cabinet 10, is influenced by the air inside the walls 13, this air must be exhausted both through venting apertures of one or both shells 11 and 12, as shown by reference number 15 in figure 1, and along the joining edges 11' and 12' of the two shells.

As previously stated, in a conventional foaming apparatus the growth of the foam and its structural homogeneity are influenced both by the presence of air to be vented, and by the more or less complicated design of the walls 13 of the refrigerator cabinet 10.

It is also known that use of highly reactive polyurethane formulations allows vacuum to improve growth of the foam, contributing to reduce the working times: However, in view of the complex design of a refrigerator cabinet, or refrigeration container, and the impossibility to obtain a suitable seat between the facing edges of the two shells, all this has made application of vacuum difficult. With the previous international patent applications WO-A-2006/013002 and WO-A-2006/013004, the applicant suggested to enclose the entire foaming apparatus in a large vacuum chamber; however, the overall dimensions of the vacuum chamber are such as to make it necessary to suck greater volumes of air, for comparatively lengthy times.

According to this invention it has been discovered that it is possible to further improve this technology, by closing a refrigeration container such as the refrigerator cabinet 10 of figure 1, in a smaller foaming cell having a comparatively small volume, basically equal to or slightly higher than the volume of the same refrigeration container to be foamed, by an extremely simple solution, such as to allow a substantial reduction in energy consumption to suck air, and generate a required vacuum condition for foaming.

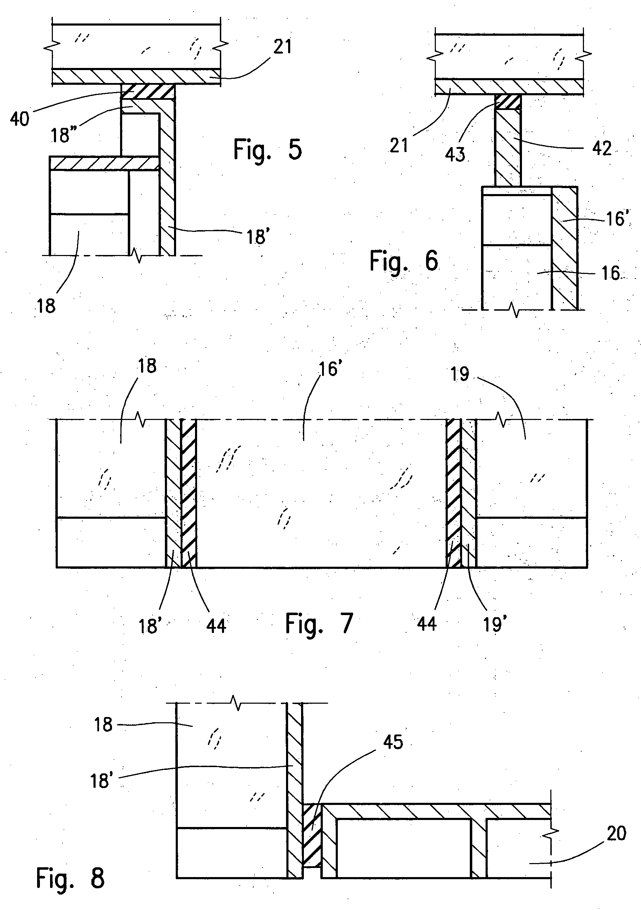

An example of a foaming cell suitable for foaming under vacuum condition insulation containers, according to the invention, is shown in figures 1 to 4 of the attached drawings, and in the details of figures 5 to 8.

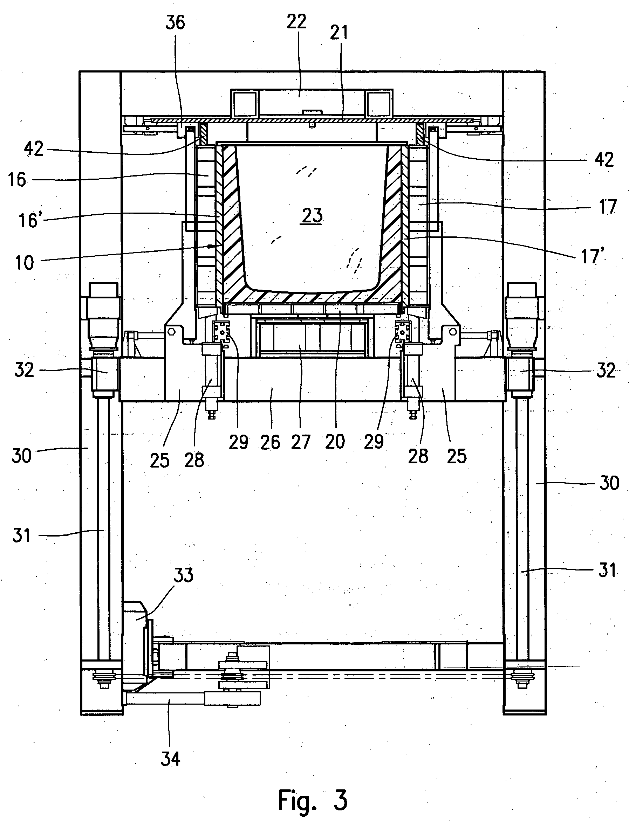

As shown in figures 2 and 3, the foaming cell according to this invention, as per a conventional foaming apparatus, comprises four side shore panels conforming the outer surface of the cabinet walls, specifically two longitudinal shore panels 16, 17 parallel to the longitudinal axis of the foaming cell (figure 3), and two cross shore panels 18, 19 (figure 2). The foaming cell comprises also a bottom table, for example consisting of a removable pallet 20 for supporting the refrigerator cabinet 10, and an internal shore member 23 conforming to the inner surfaces of the cabinet walls, more simply "plug member", removably connected to an upper closure lid 21 fastened to a support structure 22.

Again with reference to figures 2 and 3, it may be noted that the side shore panels 16, 17, 18 and 19 are provided with an air-impervious surface, that is covered with a metal sheet, or are shaped to extend between respective opposite contact edges or surfaces of the side panels themselves, the bottom table 20 and upper closure lid 21, to provide an air-tight vacuum chamber in the closed condition of the foaming cell.

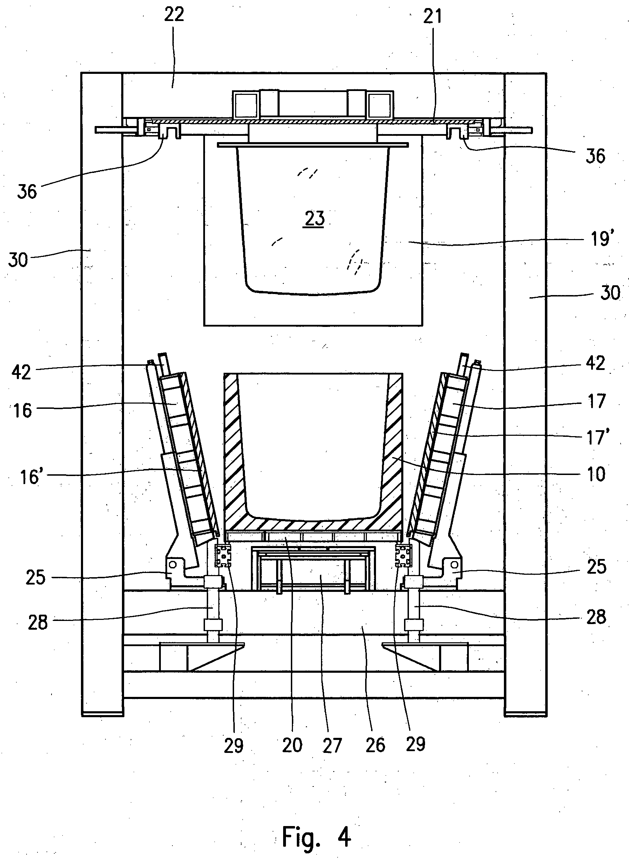

In the example shown, the cross shore panels 18 and 19 are connected, by rods 24, to four uprights 22' which downwardly extend from the support structure 22; the connecting rods 24 allow the shore panels 18 and 19, due to their own weight, to move away from the walls of the refrigerator cabinet 10 at the opening of the foaming cell. Otherwise, the longitudinal shore panels 16 and 17 are pivoted on rods 25 fastened to two cross support beams 26 which are vertically mobile between an upper position shown in figure 3, in which the foaming cell is in a closed condition, and a lower position shown in figure 4, in which the cell is in an open condition. Between the two cross beams 26 a longitudinal beam 27 extends, on which the bottom table 20 for supporting the refrigerator cabinet 10 is positioned; hydraulic or pneumatic actuators 28 control the opening and closing movements of the side panels. When the bottom table 20 is provided by a removable pallet, it may be introduced and removed from the foaming cell with a refrigerator cabinet 10 by a conveyor 2-9, which is vertically mobile with the beam 26, 27 of the support structure for the longitudinal panels 16, 17; as an alternative, the bottom table 20 may be permanently fixed to the movable support structure.

The vertical movement of the beams 26 and 27 forming the support structure for the longitudinal shore panels 16, 17 and bottom table 20 may be obtained in any way, by appropriate control means. For example, as shown in figure 3, the vertical movement of beams 26 and 27 may be obtained by a screw control system comprising, at each vertical upright 30, a screw 31 along which a threaded bush or nut 32 fixed to a corresponding end of a beam 26 may runs; the screws 31 are operatively connected to each other and to a control motor 33 by a mechanical transmission 34.

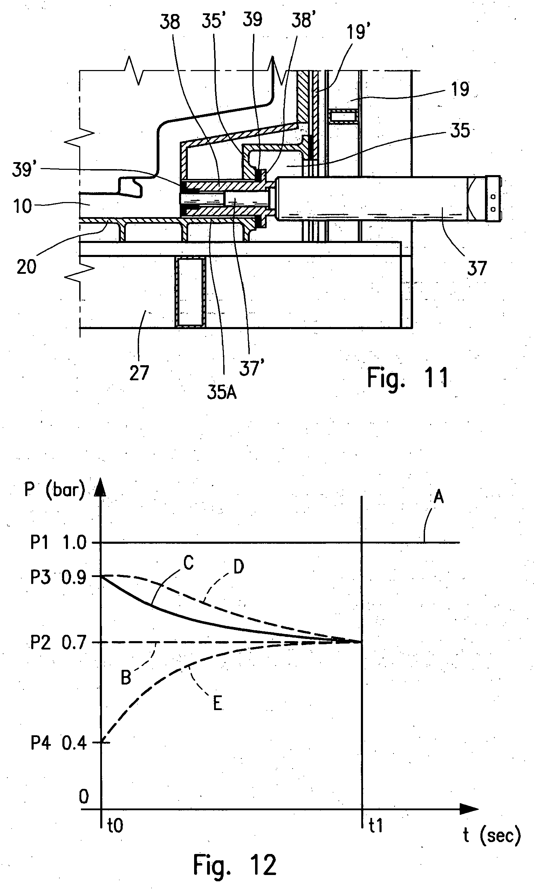

In an appropriate position of the apparatus, for example at the cross shore panel 19 shaped to house the refrigerator compressor, a niche 35 and a hole 35A have been provided for introduction of an usual mixing head 37 of high pressure type, as shown in figure 11, by which it is possible to inject a metered quantity of a polyurethane reactive mixture into the hollow walls of the refrigerator cabinet 10 to foam in a vacuum condition; the reference number 36 in figure 2, relates to a mechanical clamping system for engaging and disengaging the beams 26 to the uprights 22' for the cross shore panels 18 and 19.

As previously indicated, according to a first aspect of the invention, the foaming cell provided by the side shore panels 16, 17, 18, 19, the bottom table 20 and the upper closure lid 21, must be air-tightly closed both to cause a shore action against the walls of the refrigerator cabinet 10, and to generate a required vacuum degree, or negative pressure, inside the hollow walls of the refrigerator cabinet 10.

In this regard, the four shore panels 16, 17, 18, 19, and closure lid 21 on the internal side of the cell, have a covering provided by sturdy metal plates 16', 17', 18', 19' which extend for the entire length and width of the panels themselves to provide an air-impervious surface; similarly, the bottom table 20 includes a metal plate which continuously extends between the side shore panels in a closed condition of the foaming cell; the set of metal plates of the side panels, the bottom table and the upper closure lid form an internal covering of the foaming cell, which may air-tightly closed.

To this purpose and in order to allow the necessary vacuum seal when the foaming cell is closed, a gasketing system has been provided between contact surfaces of the facing side edges of the side panels 16, 17, 18, 19, the upper closure lid 21 and the bottom table 20, or structurally and functionally equivalent parts.

In particular, the metal plates 18' and 19' of the cross shore panels 18 and 19 extend towards the upper closure lid 21, ending with an outwardly bent edge, as indicated by 18" for plate 18' in figure 5. Between opposite contact surfaces of the upper edges of plates 18', 19' and closure lid 21, or more generally between contact edge surfaces of the shore cross panels and lower surface of the closure lid 21, there is a suitable sealing gasket, as indicated by 40 in figure 5 in which the gasket 40 is fastened by an adhesive, to the upper edge 18" of the metal plate 18' of the shore panel 18. The above applies similarly for the metal plates of shore panels 16 and 17 parallel to the longitudinal axis of the foaming cell. However, in certain cases to retrofit an existing foaming apparatus and to obtain a seal against the lid 21, or more generally for a seal between the upper lid 21 and the longitudinal panels 16, 17, it may be necessary to provide each panel 16, 17, at the upper side, with a spacer 42 as shown in the example of figure 6. Once again between contact surfaces of the lid 21 and the spacer 42, or more generally between contact surfaces of the longitudinal panels 18, 19 and the lower surface of the lid 21, a sealing gasket 43 is arranged, as shown in figure 6.

A similar air-tight seal must be provided between the contact surfaces of the edges of the side panels 16, 17, 18 and 19, and contact surfaces of said side panels and the bottom table 20.

A seal between the side shore panels 16, 18 and 19 is shown by way of example in figure 7, where the same reference numbers of the previous figures have been used to indicate similar or equivalent parts. It may be seen from figure 7 that the seal between the side shore panels, or more properly between plate 16' of longitudinal shore panel 16 and plates 18' and 19' of the two cross shore panels 18 and 19, is again obtained by a sealing gasket 44, fastened to the vertical edges of the metal plate 16' of panel 16.

Lastly, the air-tight seal between the side shore panels 16, 17, 18, 19 and bottom table 20 may be performed in the same mode. In particular, in figure 8, use is shown of a sealing gasket 45 between a side edge of the bottom table 20 and the lower edge of the metal plate 18' of the cross shore panel 18; what has been said and shown for the shore panel 18 also applies for the remaining shore panels, specifying that the gaskets may be fastened by adhesive, to the lower edge of the plates 16', 17', 18' and 19', or to the peripheral edges of the bottom table 20.

Returning now to the example in figure 2, to suck air and to create a required degree of vacuum within the foaming cell and into the hollow walls of a refrigeration container such as the refrigerator cabinet 10, it is necessary to connect the foaming cell directly to a vacuum source. In this regard, the closure lid 21 includes at least one suction hole 47 connectable to a vacuum source provided by a vacuum storage tank 48 by a first solenoid valve 49, in which the vacuum storage tank 48 is connectable to a vacuum pump 46 by a second solenoid valve 50; both solenoid valves 49 and 50 are operatively connected to a control unit CU suitable for controlling the entire foaming equipment. A vacuum sensor 51 allows detection and control of the degree of vacuum generated in the foaming cell and in the hollow walls of the refrigerator cabinet 10; in this regard, the vacuum sensor 51 generates a control signal proportional to the degree of vacuum existing in the foaming cell, which is sent to an inlet side of the control unit CU.

Depending on requirements, the system for sucking the air and generating, the vacuum may be duly controlled by the control unit CU, to be disabled as soon as a desired degree of vacuum or negative pressure has been reacted, or re-enabling keeping it in an operative condition in order to maintain in the foaming cell, and consequently in the hollow walls of the refrigerator cabinet 10, a constant vacuum degree, or to provide raising or lowering vacuum condition as the reactive polyurethane foam grows and expands in the walls of the refrigerator cabinet 10, as will be explained further on; this is consequent to the fact that expansion of the foam tends to compress the air or gas remaining in the hollow walls of the refrigerator cabinet, causing a partial reduction of the vacuum degree, which is particularly critical when the polyurethane foam expands in areas far from the injection point of the polyurethane mixture.

The generation of the vacuum in the foaming cell and in the hollow walls 13 of the refrigeration container proves to be particularly critical for obtaining a polyurethane foam with a homogenous structure, uniformly distributed and devoid of holes and/or cavities.

The choice of the vacuum degree and the control modes of the same vacuum must be determined by appropriate tests, as a function of the shape and/or dimensions of the refrigeration container to be foamed.

By way of purely indicative example, reference is made to the graph in figure 12, which shows several vacuum control curves for pressure, referred to time, between the instant t0, at the starting of the injection of the polyurethane mixture into the hollow walls of refrigeration container, and the instant t1 corresponding to the "gel time", depending upon the specific polyurethane formulation and its chemical reactivity.

In the graph of figure 12, reference P is used to indicate absolute pressure values, in "bar", referred to time "t" in seconds. In particular, line A indicates a value P1 corresponding to 1 bar, in respect to which it is possible to calculate a percentage of degree of vacuum, whereas line B indicates a value P2 of a constant pressure reference, for example a pressure of 0.7 bar, corresponding to a vacuum degree of 30% in the foaming cell. Lastly, again in figure 12, lines B and C starting from a value of P3 higher than P2, equal for example to 0.9 bar, and line E starting from P4 less than P2, for example of 0,4 bar, are indicative of the possibility of controlling different phases for creation of vacuum in the foaming cell, following a decreasing or increasing pressure ramp, until to reach the reference value P2 in the range of time between the starting time "t0" for injection of the polyurethane mixture and time "t1" for formation of the "gel", which range may be between 15" and 40", depending on the formulation and the chemical reactivity of the polyurethane mixture. It is clear that, depending on the operative program stored in the control unit CU, the pressure change in the time range t0-t1 may increase or decrease by any law, starting from a value of absolute pressure P lower than 1 bar, until to reach the reference pressure P2 in the foaming cell in any time between "t0" and "t1", on the basis of specific requirements.

From what is said and shown, it is therefore clear that an apparatus has been provided for foaming a polyurethane mixture into hollow walls of refrigerator cabinets, freezers and similar refrigeration containers characterised by use of a foaming cell of reduced dimensions, obtained by providing an appropriate sealing system or gaskets between contact surfaces of the side shore panels, the bottom table and the upper closure lid.

Since the volume of the foaming cell basically corresponds to the volume of the refrigeration container or cabinet 10, taking also into account the volume of the internal shore plug 23, it is clear that the volume of air to be sucked to generate the vacuum in the hollow walls 13 of the container 10, basically corresponds to the volume of air space of the same hollow walls, or slightly higher. Consequently, compared to the foaming apparatuses previously known by WO-A-2006/013002 and WO-A-2006/013004, it is now possible to reach a higher vacuum degree in a very reduced time, saving energy, by making few structural changes compared to a conventional foaming apparatus, thereby making to retrofit also any existing apparatus in an extremely simple mode.

The gaskets for vacuum seal may be of any kind, and, in any case, attached to the panels, the support table or closure lid; for example, they may be gaskets in rubber or elastically compressible material, or may be of inflatable type suitably attached by an adhesive, or threaded into appropriate slots.

The working of the foaming cell will now be briefly explained, in conformity with the method according to this invention, with reference to the apparatus and refrigerator cabinet of figures 2 to 4, in which the refrigeration container is in the form of a refrigerator cabinet 10 and in which the bottom table 20 for supporting the refrigerator cabinet 10 is in the form of a removable pallet.

At the starting, the foaming cell is in an open condition, as shown in figure 4, with the support beams 26, 27, shore panels 16, 17, and conveyor 29 in a totally lowered position, and in which the shore panels 16, 17 are tilted outwards.

In this open condition of the foaming cell, it is possible to remove the pallet or bottom table 20 with a refrigerator cabinet 10 which has been already foamed and, subsequently introduce through the conveyor 29, another pallet or bottom table 20 with a new refrigerator cabinet 10 to be foamed.

At this point, the support beams 26, 27, with pallet 20 and the new refrigerator cabinet 10 to be foamed are raised in the condition of figure 3, by actuation of the control motor 33 for the screw and nut transmission 31, 34. During the raising of the support beams 26, 27, the shore plug 23 penetrates into the cavity of the refrigerator cabinet 10, against the internal shell 12; simultaneously, or immediately after the side shore panels 16, 17, 18 and 19 are moved against the external surface of the external shell 11 of the refrigerator cabinet 10, and locked for example by acting with the hooks 36 for panels 16 and 17, or with appropriate locking means.

During closure, the gaskets 40, 43, 44 and 45 are duly compressed to seal in the closed condition the foaming cell, as shown in figures 2 and 3.

As previously specified, during closure of the foaming cell, or immediately after, a foaming head 37 is threaded into the niche 35 and a hole 35A of the side panel 19, or into a hole of the bottom table 20, before starting the generation of the vacuum.

The sealing of the mixing head 37 in respect to the foaming cell, may be performed in any suitable way, for example as shown in the enlarged detail of figure 11.

As shown, the niche 35 is open at a front side for insertion of the mixing head 37, and provided with a wall 35' having the through-hole 35A for the outlet duct 37' of the mixing head, and a sealing sleeve 38. A first sealing gasket 39 is arranged between opposite surfaces of an annular flange 38' of the sleeve 38 and the front wall 35' of niche 35, whereas a second sealing gasket 39' is arranged between opposite surfaces of the sleeve 38, the outlet duct 37' of the mixing head and the external shell 11 of the refrigerator cabinet 10. In brief, the foaming of the refrigerator cabinet, or similar refrigeration container, occurs in the following manner: the foaming cell is closed and sealed by applying the mixing head 37; the vacuum is then generated and a metered quantity of a polyurethane mixture is injected into the hollow walls of the cabinet. When a preset time has lapsed, depending on the gel time of the polyurethane mixture, for example, between 15 and 40 seconds, the vacuum is removed, the mixing head 37 is withdrawn, the foaming cell is opened and the pallet or bottom table 20 is disengaged and removed with the foamed refrigerator cabinet 10.

More properly, upon the closure of the foaming cell, the control unit CU, on the basis of its working program, by actuating the solenoid valve 49, controls the connection of the foaming cell to a vacuum source consisting for example of the vacuum storage tank 48 in which a vacuum with a preset value has already been generating by the vacuum pump 46.

The connection of the foaming cell to the vacuum source 48 causes rapid suction of the air in the foaming cell and consequently in the hollow walls of the refrigerator cabinet 10; since the shore plug 23 and the side shore panels 16, 17, 18 and 19 are in contact with the internal and external surfaces of the walls of the refrigerator cabinet 10, the volume of air to be sucked for generation of vacuum, in the condition shown in figure 2, basically corresponds with the volume of the air-space of the walls of the refrigerator cabinet 10, or slightly higher.

When the vacuum sensor 51 detects that a desired degree of vacuum has been reached inside the foaming cell, a signal is sent to the control unit CU which, by actuating the solenoid valve 49, isolates the foaming cell from the vacuum source 48. Once the vacuum is created in the foaming cell and in the hollow walls of the refrigerator cabinet 10, always on the basis of its operative program, the control unit CU actuates the mixing head 37 to inject a metered quantity of a polyurethane mixture, which chemically reacts; rapid expansion of the polyurethane mixture and total filling of the walls of the refrigerator cabinet with a homogenous layer of polyurethane foam is therefore greatly assisted by the same vacuum, to mould an insulation layer of polyurethane material into the space of the hollow walls of the refrigerator cabinet 10.

During expansion of the polyurethane mixture, due to the rising of the foam, the air remaining in the hollow walls of the cabinet 10 is compressed, causing a reduction of the degree of vacuum. Therefore, if the vacuum sensor 51 detects that the vacuum degree is reduced by a preset percentage, compared to a reference value, the control unit-CU may connect the foaming cell once again to the vacuum source 48, to restore the desired vacuum degree, to keep it at a constant value or changing the vacuum degree according to requirements.

As an alternative, the foaming cell and the hollow walls of the refrigerator cabinet may be maintained at a degree of vacuum, or negative pressure of constant value by a larger vacuum source 48 suitable to prevent any significant changes in the preset vacuum value, which may be restored by reconnecting the vacuum source 48 to the vacuum pump 46.

Once the polyurethane foam has completely filled the walls of the refrigerator cabinet, and when the polymeric structure of the foam has reached a consistency such as to resist to the atmospheric pressure and to prevent any deformation of the cabinet shells, the vacuum is removed. At the end of the polymerisation time, the foaming cell may be reopened as shown in figure 4; the pallet or bottom table 20 with the foamed refrigerator cabinet may therefore be removed by the conveyor 29 and replaced with another pallet or table 20 with a new refrigerator cabinet to be foamed, as previously specified. In the case shown, the pallet or bottom table 20 for supporting a refrigerator cabinet may be removed and reintroduced from an end of the foaming cell; however, it is possible to foresee a fixed installation for the bottom table 20 providing a suitable conveying system for the refrigerator cabinets.

The foaming cell and the sealing gasket system may be used both in the case of a newly designed foaming apparatus and to retrofit still existing foaming apparatuses.

In the case of figures 3 and 4, as previously described, the foaming cell has been applied to a conventional apparatus of the type comprising a single fixed shore plug, for example of the type shown in IT-A-192708 of the same applicant.

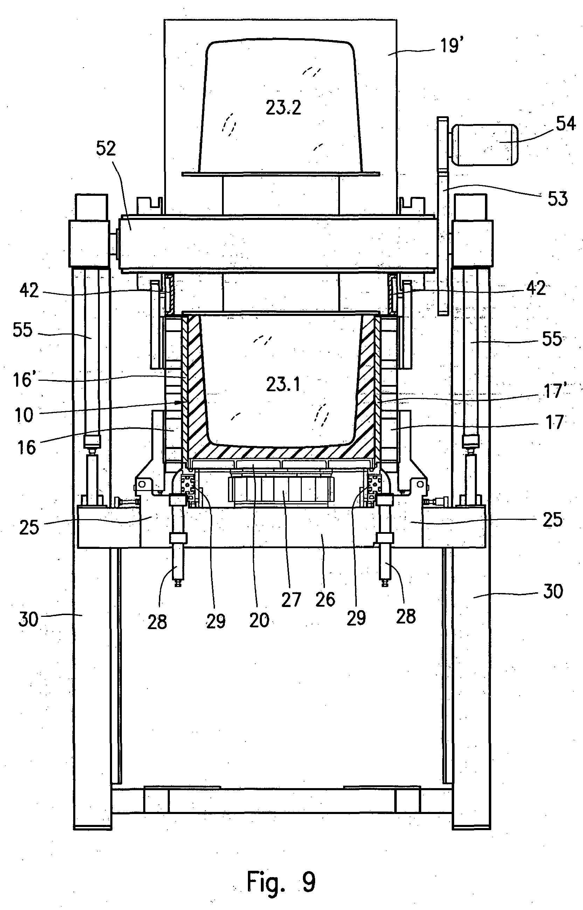

Figure 9, on the other hand, shows application of the foaming cell according to the invention to a foaming apparatus comprising a number of rotary supported shore plugs, for example of the type described in the previous patent US-A-4,664,614 of the same applicant; in figures 9, the same reference numbers as the previous figures have been used to indicate similar or equivalent parts.

Briefly, the foaming apparatus of figure 9 once again includes a support frame 30 for a rotary drum 52 to which, two shore plugs 23.1 and 23.2, with respective closure lids and relative cross panels 19 and covering plates 19' not shown are fixed in opposite and angularly spaced apart positions.

The rotary drum 52, via gear transmission 53, is connected to a control motor 54 in order to step rotate, and selectively positioning each time one of the shore plug 23.1, 23.2, above underlying bottom table 20; for the remaining, the foaming cell and its working correspond to the foaming cell of figures 1 to 4.

As an alternative to the solution of figure 9, the replacement of the shore plugs may be performed by providing a trolley for moving a closure lid with a respective shore plug, between an operative position into the foaming cell and a side position to replace by rotation. Lastly, in figure 9, the raising and lowering means, for the beams 26 and 27, are provided by hydraulic or pneumatic cylinders 55, as an alternative to the screw/nut device of the previous examples.

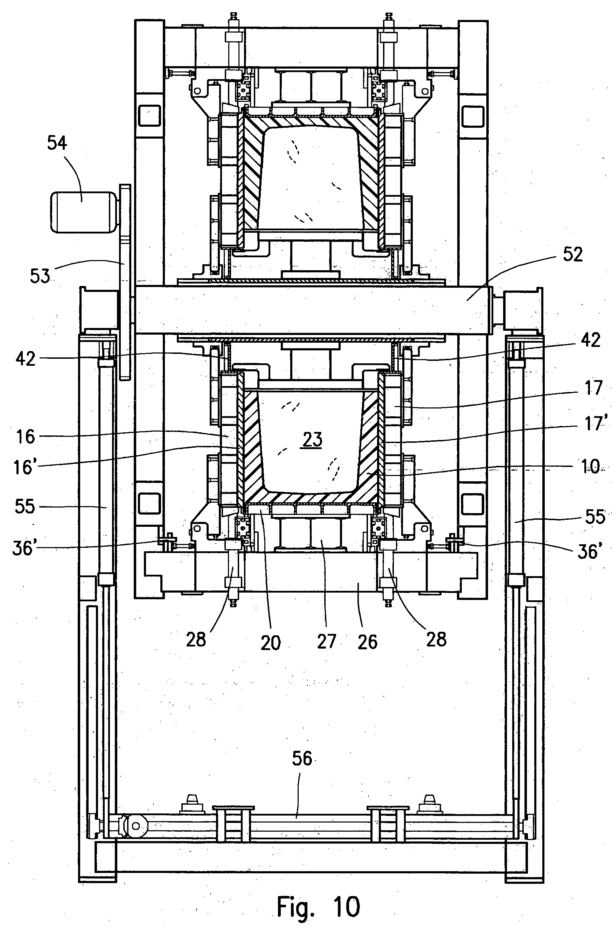

Figure 10 shows the use of a number of foaming cells according to the invention applied to a rotary drum of the type described in the previous patent application WO-A-2006/013004 of the same applicant.

Once again, in figure 10, the same reference numbers have been used to indicate similar or equivalent parts. The apparatus in figure 10 differs from the apparatus in figure 9 in that the rotary drum 52 is designed to support at least two foaming cells, to selectively move them by step rotation along a circular path, starting from a lower position in which a foaming cell is downwardly facing, to be opened and closed for loading and removing the refrigerator cabinets, and for generation of the vacuum and injection of a polyurethane mixture into their hollow walls; towards upper positions along the circular path in which the foaming cells are disconnected by the vacuum source and maintained in the closed condition during foaming.

The apparatus according to the example of figure 10 also differs from the apparatus in figure 9, in that the beams 26 and 27 for the support table 20 for the refrigerator cabinet are now detached from structure 30, to rotate with the foaming cell itself. In this second case, auxiliary beams 56 are used, only one shown in figure 10, and actuator 55 are provided to raise and lower the beams 27, 28 the table 20 and a refrigerator cabinet 10 to be foamed.

The working of the foaming cells of the apparatuses of figure 10 basically does not differ from that of the foaming cell of the apparatus in figures 3 and 4, to which reference is made, with the sole difference that the foaming cells are now moved, by step rotation of the support drum 52, between a lower operative position, in which the foaming cell may be opened, closed and connected to the vacuum source for subsequent injection of the polyurethane mixture, and one or more upper positions, keeping them closed for a time necessary to allow hardening of the foam.

From what has been stated and shown in the various examples, it is clear that a method and an apparatus has been provided for foaming of refrigerator cabinets, freezers and similar refrigeration devices, in which use is made of a vacuum assisted foaming cell, comprising a support table for a refrigerator cabinet, side shore panels, at least one closure lid with an internal shore plug and a system of sealing gaskets to air-tight close the foaming cell, allowing the same cell to be operatively connected to a vacuum source and to a mixing head for injecting a polyurethane mixture, under the management of a programmable control unit.

## Claims

1. A method for foaming and moulding an insulation layer into hollow walls (13) of a refrigeration container (10), in which a liquid polyurethane mixture is injected into the hollow walls (13) of the refrigeration container (10), leaving the polyurethane mixture to expand in a vacuum degree condition, comprising the steps of:
enclosing the refrigeration container (10) into a foaming cell comprising a bottom table (20), side shore panels (16, 17, 18, 19) conforming to outer surfaces of container walls (13) and a closure lid (21) provided with a shore plug (23) conforming to inner surfaces of the container walls (13), said bottom table (20) and side shore panels (16, 17, 18, 19) being movably supported between an open and a closed condition of the foaming cell;
providing an air-impervious surface on the side shore panels (16, 17, 18, 19), the bottom table (20) and the closure lid (21) facing inside the foaming cell;
providing sealing gaskets (40, 43, 44, 45) between opposite contact surfaces of the bottom table (20), the side shore panels (16,17,18,19) and the closure lid (21);
sealingly enclosing the refrigeration container (10) into the foaming cell;
connecting the closed foaming cell to a vacuum source (48);
generating a vacuum degree in the foaming cell and in the hollow walls (13) of the refrigeration container (10);
injecting a metered quantity of a foamable polyurethane mixture into the hollow walls (13) of the refrigeration container (10); and
causing foaming under vacuum degree condition of the injected polyurethane mixture up to a complete filling of the hollow walls (13) of the refrigeration container (10) by the polyurethane foam.

2. The method according to claim 1, further comprising the step of maintaining a vacuum degree in the foaming cell at a constant pressure value.

3. The method according to claim 2 further comprising the steps of:
detecting the pressure in the foaming cell; and
causing changes in the vacuum **degree** until to reach a preset pressure value in the foaming cell, starting from the beginning of the injection of the polyurethane mixture into the hollow walls (13) of the refrigeration container (10).

4. The foaming method according to claim 1, further comprising maintaining a vacuum degree at a constant pressure value during the foaming of the polyurethane mixture.

5. The foaming method according to claim 3, further comprising causing a pressure change of the vacuum **degree** condition in the foaming cell, starting from a pressure higher, or lower, than a reference pressure value.

6. The foaming method according to claim 1, further comprising a control unit (CU) **configured** to reconnect the foaming cell to the vacuum source (48) during the foaming step of the polyurethane mixture, to change the vacuum degree in the foaming cell.

7. An apparatus suitable for vacuum foaming of refrigeration containers (10), having hollow walls (13) by the method of claim 1, the apparatus comprises at least one foaming cell having:
a bottom table (20) for supporting a refrigeration container (10); and
side shore panels (16, 17, 18, 19) conforming to the outer surfaces of the container walls (13);
an internal shore plug (23) fastened to a closure lid (21), conforming to the inner surfaces of the container walls (13);
control means (31, 32, 33; 55) for moving the bottom table (20) and the side shore panels (16, 17, 18, 19) between an open and a closed condition of the foaming cell;
means for injecting a foamable polyurethane mixture into hollow walls of the refrigeration container (10);
wherein the bottom table (20), the side shore panels (16, 17, 18, 19) and the closure lid (21) facing inside the foaming cell are provided with air-impervious surfaces and comprising:
sealing gaskets (40, 43, 44, 45) between opposite contact surfaces of the side shore panels (16, 17, 18, 19), the bottom table (20) and the closure lid (21);
a vacuum source (48) and valve means (49) for connecting and disconnecting the foaming cell to the vacuum source (48);
a control unit (CU) and a sensor (51) for detecting a vacuum **degree** inside the foaming cell operatively connected to the control unit (CU);
the control unit (CU) being **configured** to connect and maintain connection of the foaming cell to the vacuum source (48), by the valve means (49) on the basis of control signals from the vacuum sensor (51).

8. The foaming apparatus according to claim 7, wherein the sealing gaskets (40, 43, 44, 45) comprise gaskets of elastically compressible material.

9. The foaming apparatus according to claim 7, wherein the sealing gaskets (40, 43, 44, 45) comprise inflatable gaskets.

10. The foaming apparatus according to claim 7, further comprising:
a support frame (30) for supporting the closure lid (21), the internal shore plug (23), and at least one side shore panel (19);
a set of beams (26, 27) for supporting the bottom table (20) and the remaining side shore panels (16, 17, 18) of the cell; and
control means (30, 31, 33) for moving said set of support beams (26, 27) between a lowered position in an open condition of the foaming cell and a raised position in a closed condition of the foaming cell.

11. The foaming apparatus according to claim 7, further comprising:
a frame (30);
a rotary drum (52) rotatably supported by the frame (30);
a first and at least a second closure lid (21) each provided with an internal shore plug (23) and with at least one side shore panel (19), fastened at angularly spaced apart positions to the rotary drum (52);
a set of beams (26, 27) for supporting the bottom table (20) and the remaining side shore panels (16, 17, 18) of the foaming cell, said set of beams being vertically mobile between a lower position in an open condition of the foaming cell and a raised position in a closed condition of the foaming cell;
first means of control (55) for moving said set of support beams between the lower and the raised position; and
second control means (53,54) for step moving the rotary drum (52) and a selective positioning of each closure lid (21) with a respective internal shore plug (23) downwardly facing towards the bottom table (20) and the remaining side shore panels (16, 17, 18) of the foaming cell.

12. The foaming apparatus according to claim 7, further comprising:
a frame (30);
a rotary drum (52) rotatably supported by the frame (30);
a first and at least a second foaming cell angularly fastened to the rotary drum (52), and means (54) to rotate the rotary drum (52) and the foaming cells along a circular path comprising an operative position in which each foaming cell is downwardly facing; and
means for connecting each foaming cell, in the downwardly facing operative position, to the vacuum source (48).

13. The foaming apparatus according to claims 7 and 12, further comprising;
first and at least a second set of beams (26, 27) for supporting a respective bottom table (20) and respective side shore panels (16, 17, 18) of a foaming cell;
means (36') for disengageably locking each set of beams (26, 27) to the rotary drum (52); and
means (55, 56) to move the set of beams (26, 27), the bottom table (20) and the shore panels (16, 17, 18) of each foaming cell, between a lower open position and a raised closed position of the foaming cell.

## Patentansprüche

1. Verfahren zum Aufschäumen und Formen einer Isolationsschicht in den hohlen Wänden (13) eines Kühlbehälters (10), in dem eine flüssige Polyurethanmischung in die hohlen Wände (13) des Kühlbehälters (10) eingespritzt wird, wobei die Polyurethanmischung sich überlassen bleibt, um sich in einen Vakuumniveauzustand auszudehnen, wobei das Verfahren die folgenden Schritte umfasst:
Einschließen des Kühlbehälters (10) in eine Aufschäumzelle, die einen Bodentisch (20), Seiteneinschlussplatten (16, 17, 18, 19), die sich an die äußeren Oberflächen der Behälterwände (13) anpassen, und einen Deckelverschluss (21), der mit einem Kern (23) versehen ist, der sich an die inneren Oberflächen der Behälterwände (13) anpasst, umfasst, wobei der Bodentisch (20) und die Seiteneinschlussplatten (16, 17, 18, 19) zwischen einem offenen und einem geschlossenen Zustand der Aufschäumzelle beweglich getragen werden;
Bereitstellen einer luftundurchlässigen Oberfläche auf den Seiteneinschlussplatten (16, 17, 18, 19), auf dem Bodentisch (20) und auf dem Deckelverschluss (21), die der Aufschäumzelle nach innen zugewandt sind;
Bereitstellen von Abdichtungsmanschetten (40, 43, 44, 45) zwischen gegenüberliegenden Kontaktoberflächen des Bodentisches (20), der Seiteneinschlussplatten (16, 17, 18, 19) und des Deckelverschlusses (21);
abdichtendes Einschließen des Kühlbehälters (10) in der Aufschäumzelle;
Verbinden der geschlossenen Aufschäumzelle mit einer Vakuumquelle (48);
Erzeugen eines Vakuumniveaus in der Aufschäumzelle und in den hohlen Wänden (13) des Kühlbehälters (10);
Einspritzen einer abgemessenen Menge einer aufschäumbaren Polyurethanmischung in die hohlen Wände (13) des Kühlbehälters (10); und
Veranlassen, dass unter dem Zustand eines Vakuumniveaus ein Aufschäumen der eingespritzten Polyurethanmischung bis zu einer vollständigen Füllung der hohlen Wände (13) des Kühlbehälters (10) durch den Polyurethanschaum stattfindet.

2. Verfahren nach Anspruch 1, das ferner den Schritt eines Aufrechterhaltens eines Vakuumniveaus in der Aufschäumzelle bei einem konstanten Druckwert umfasst.

3. Verfahren nach Anspruch 2, das ferner die folgenden Schritte umfasst:
Detektieren des Drucks in der Aufschäumzelle; und
Veranlassen von Veränderungen des Vakuumniveaus so lange, bis ein festgesetzter Druckwert in der Aufschäumzelle erreicht ist, wobei vom Beginn der Einspritzung der Polyurethanmischung in die hohlen Wände (13) des Kühlbehälters (10) gestartet wird.

4. Aufschäumverfahren nach Anspruch 1, das ferner ein Aufrechterhalten eines Vakuumniveaus bei einem konstanten Druckwert während des Aufschäumens der Polyurethanmischung umfasst.

5. Aufschäumverfahren nach Anspruch 3, das ferner ein Veranlassen einer Druckänderung des Vakuumniveauzustands in der Aufschäumzelle umfasst, wobei von einem Druck gestartet wird, der höher oder niedriger als ein Referenzdruckwert ist.

6. Aufschäumverfahren nach Anspruch 1, das ferner eine Steuereinheit (CU = Control Unit) umfasst, die konfiguriert ist, um während des Aufschäumschritts der Polyurethanmischung die Aufschäumzelle erneut mit der Vakuumquelle (48) zu verbinden, um das Vakuumniveau in der Aufschäumzelle zu verbinden.

7. Vorrichtung, die zur Vakuumschäumung von Kühlbehältern (10), die hohle Wände (13) aufweisen, gemäß dem Verfahren nach Anspruch 1 geeignet ist, wobei die Vorrichtung mindestens eine Aufschäumzelle umfasst, die aufweist:
einen Bodentisch (20), um einen Kühlbehälter (10) zu tragen; und
Seiteneinschlussplatten (16, 17, 18, 19), die sich an die äußeren Oberflächen der Behälterwände (13) anpassen;
einen internen Kern (23), der an einem Deckelverschluss (21) befestigt ist und der sich an die inneren Oberflächen der Behälterwände (13) anpasst;
Steuermittel (31, 32, 33; 55), um den Bodentisch (20) und die Seiteneinschlussplatten (16, 17, 18, 19) zwischen einem offenen und einem geschlossenen Zustand der Aufschäumzelle zu bewegen;
Mittel zum Einspritzen einer aufschäumbaren Polyurethanmischung in die hohlen Wände des Kühlbehälters (10);
wobei der Bodentisch (20), die Seiteneinschlussplatten (16, 17, 18, 19) und der Deckelverschluss (21), die der Aufschäumzelle nach innen zugewandt sind, mit luftundurchlässigen Oberflächen versehen sind und umfassen:
Abdichtungsmanschetten (40, 43, 44, 45) zwischen gegenüberliegenden Kontaktoberflächen der Platten (16, 17, 18, 19) von Seitenstreben, des Bodentisches (20) und des Deckelverschlusses (21);
eine Vakuumquelle (48) und Ventilmittel (49), um die Aufschäumzelle mit der Vakuumquelle (48) zu verbinden und zu trennen;
eine Steuereinheit (CU) und ein Sensor (51), um ein Vakuumniveau innerhalb der Aufschäumzelle, die operativ mit der Steuereinheit (CU) verbunden ist, zu detektieren;
wobei die Steuereinheit (CU) konfiguriert ist, um eine Verbindung der Aufschäumzelle mit der Vakuumquelle (48) durch die Ventilmittel (49) auf der Grundlage von Steuersignalen des Vakuumsensors (51) aufzubauen und aufrechtzuerhalten.

8. Aufschäumvorrichtung nach Anspruch 7, wobei die Abdichtungsmanschetten (40, 43, 44, 45) Dichtungsmanschetten aus einem elastischen kompressiblen Material umfassen.

9. Aufschäumvorrichtung nach Anspruch 7, wobei die Abdichtungsmanschetten (40, 43, 44, 45) aufblasbare Dichtungsmanschetten umfassen.

10. Aufschäumvorrichtung nach Anspruch 7, die ferner umfasst:
einen Trägerrahmen (30), um den Deckelverschluss (21), den internen Kern (23) und mindestens eine Platte (19) einer Seitenstrebe zu tragen;
einen Satz von Trägern (26, 27), um den Bodentisch (20) und die restlichen Seiteneinschlussplatten (16, 17, 18) von Seitenstreben der Zelle zu tragen; und
Steuermittel (30, 31, 33), um den Satz von Trägern (26, 27) zwischen einer abgesenkten Position in einem offenen Zustand der Aufschäumzelle und einer angehobenen Position in einem geschlossenen Zustand der Aufschäumzelle zu bewegen.

11. Aufschäumvorrichtung nach Anspruch 7, die ferner umfasst:
einen Rahmen (30);
eine Drehtrommel (52), die von dem Rahmen (30) drehbar getragen wird;
einen ersten und mindestens einen zweiten Deckelverschluss (21), wobei jeder mit einem internen Kern (23) und mit mindestens einer Seiteneinschlussplatte (19) versehen ist und an abgewinkelt beabstandet angeordneten Positionen an der Drehtrommel (52) befestigt ist;
einen Satz von Trägern (26, 27), um den Bodentisch (20) und die restlichen Seiteneinschlussplatten (16, 17, 18) der Aufschäumzelle zu tragen, wobei der Satz von Trägern vertikal zwischen einer abgesenkten Position in einem offenen Zustand der Aufschäumzelle und einer angehobenen Position in einem geschlossenen Zustand der Aufschäumzelle beweglich ist;
erste Steuermittel (55), um den Satz von Stützträgern zwischen der abgesenkten und der angehobenen Position zu bewegen; und
zweite Steuermittel (53, 54) für eine Schrittbewegung der Drehtrommel (52) und für ein selektives Positionieren jedes Deckelverschlusses (21) mit einem jeweiligen internen Kern (23), der nach unten in Richtung des Bodentisches (20) und der restlichen Platten (16, 17, 18) von Seitenstreben der Aufschäumzelle zeigt.

12. Aufschäumvorrichtung nach Anspruch 7, die ferner umfasst:
einen Rahmen (30);
eine Drehtrommel (52), die von dem Rahmen (30) drehbar getragen wird;
eine erste und mindestens eine zweite Aufschäumzelle, die abgewinkelt an der Drehtrommel (52) befestigt sind, und Mittel (54), um die Drehtrommel (52) und die Aufschäumzellen entlang eines Kreispfades zu drehen, der eine operative Position umfasst, in der jede Aufschäumzelle nach unten zeigt; und
Mittel, um jede Aufschäumzelle in der nach unten zeigenden operativen Position mit der Vakuumquelle (48) zu verbinden.

13. Aufschäumvorrichtung nach Anspruch 7 und 12, die ferner umfasst:
einen ersten und mindestens einen zweiten Satz von Trägern (26, 27), um einen jeweiligen Bodentisch (20) und jeweilige Seiteneinschlussplatten (16, 17, 18) einer Aufschäumzelle zu tragen;
Mittel (36'), um jeden Satz von Trägern (26, 27) mit der Drehtrommel (52) entriegelbar zu verriegeln; und
Mittel (55, 56), um den Satz von Trägern (26, 27), den Bodentisch (20) und die Seiteneinschlussplatten (16, 17, 18) jeder Aufschäumzelle zwischen einer abgesenkten offenen Position und einer angehobenen geschlossenen Position der Aufschäumzelle zu bewegen.

## Revendications

1. Procédé de production de mousse et de moulage d'une couche isolante dans des parois creuses (13) d'une enceinte de réfrigération (10), dans lequel un mélange de polyuréthane liquide est injecté dans les parois creuses (13) de l'enceinte de réfrigération (10), laissant le mélange de polyuréthane s'étendre dans un état de degré de vide, comprenant les étapes de:
enfermement de l'enceinte de réfrigération (10) dans une cellule de production de mousse comprenant un plateau inférieur (20), des panneaux de confinement latéraux (16, 17, 18, 19) se conformant à des surfaces extérieures de parois d'enceinte (13) et un couvercle de fermeture (21) muni d'un bouchon de confinement (23) se conformant aux surfaces intérieures des parois d'enceinte (13), ledit plateau inférieur (20) et lesdits panneaux de confinement latéraux (16, 17, 18, 19) étant supportés de façon mobile entre un état ouvert et un état fermé de la cellule de production de mousse;
fourniture d'une surface imperméable à l'air sur les panneaux de confinement latéraux (16, 17, 18, 19), le plateau inférieur (20) et le couvercle de fermeture (21) se faisant face à l'intérieur de la cellule de production de mousse;
fourniture de joints d'étanchéité (40, 43, 44, 45) entre des surfaces de contact opposées du plateau inférieur (20), des panneaux de confinement latéraux (16, 17, 18, 19) et du couvercle de fermeture (21);
enfermement de manière étanche de l'enceinte de réfrigération (10) dans la cellule de production de mousse;
connexion de la cellule de production de mousse fermée à une source de vide (48);
production d'un degré de vide dans la cellule de production de mousse et dans les parois creuses (13) de l'enceinte de réfrigération (10);
injection d'une quantité mesurée d'un mélange de polyuréthane pouvant être transformé en mousse dans les parois creuses (13) de l'enceinte de réfrigération (10); et
déclenchement de la production de mousse sous un état de degré de vide du mélange de polyuréthane injecté jusqu'à un remplissage complet des parois creuses (13) de l'enceinte de réfrigération (10) par la mousse de polyuréthane.

2. Procédé selon la revendication 1, comprenant en outre l'étape consistant à maintenir un degré de vide dans la cellule de production de mousse à une valeur de pression constante.

3. Procédé selon la revendication 2, comprenant en outre les étapes de:
détection de la pression dans la cellule de production de mousse; et
amenée de changements du degré de vide jusqu'à atteindre une valeur de pression définie à l'avance dans la cellule de production de mousse, en commençant à partir du début de l'injection du mélange de polyuréthane dans les parois creuses (13) de l'enceinte de réfrigération (10).

4. Procédé de production de mousse selon la revendication 1, comprenant en outre le maintien d'un degré de vide à une valeur de pression constante pendant la production de mousse du mélange de polyuréthane.

5. Procédé de production de mousse selon la revendication 3, comprenant en outre l'amenée d'un changement de pression de l'état de degré de vide dans la cellule de production de mousse, en commençant à partir d'une pression plus élevée, ou plus basse, qu'une valeur de pression de référence.

6. Procédé de production de mousse selon la revendication 1, comprenant en outre une unité de commande (UC) configurée pour reconnecter la cellule de production de mousse à la source de vide (48) pendant l'étape de production de mousse du mélange de polyuréthane, pour changer le degré de vide dans la cellule de production de mousse.

7. Appareil approprié pour la production de mousse sous vide d'enceintes de réfrigération (10) ayant des parois creuses (13) par le procédé selon la revendication 1, l'appareil comprenant au moins une cellule de production de mousse ayant:
un plateau inférieur (20) pour supporter une enceinte de réfrigération (10); et
des panneaux de confinement latéraux (16, 17, 18, 19) se conformant aux surfaces extérieures des parois d'enceinte (13);
un bouchon de confinement interne (23) attaché à un couvercle de fermeture (21), se conformant aux surfaces intérieures des parois d'enceinte (13);
des moyens de commande (31, 32, 33; 55) pour déplacer le plateau inférieur (20) et les panneaux de confinement latéraux (16, 17, 18, 19) entre un état ouvert et un état fermé de la cellule de production de mousse;
des moyens pour injecter un mélange de polyuréthane pouvant être transformé en mousse dans des parois creuses de l'enceinte de réfrigération (10);
dans lequel le plateau inférieur (20), les panneaux de confinement latéraux (16, 17, 18, 19) et le couvercle de fermeture (21) se faisant face à l'intérieur de la cellule de production de mousse sont munis de surfaces imperméables à l'air et comprenant:
des joints d'étanchéité (40, 43, 44, 45) entre des surfaces de contact opposées des panneaux de confinement latéraux (16, 17, 18, 19), du plateau inférieur (20) et du couvercle de fermeture (21);
une source de vide (48) et un moyen formant vanne (49) pour relier et débrancher la cellule de production de mousse à/de la source à vide (48);
une unité de commande (UC) et un capteur (51) pour détecter un degré de vide à l'intérieur de la cellule de production de mousse reliée de manière opérationnelle à l'unité de commande (UC);
l'unité de commande (UC) étant configurée pour relier et maintenir la connexion de la cellule de production de mousse à la source de vide (48), par le moyen formant vanne (49) sur la base de signaux de commande provenant du capteur de vide (51).

8. Appareil de production de mousse selon la revendication 7, dans lequel les joints d'étanchéité (40, 43, 44, 45) comprennent des joints de matière compressible de façon élastique.

9. Appareil de production de mousse selon la revendication 7, dans lequel les joints d'étanchéité (40, 43, 44, 45) comprennent des joints gonflables.

10. Appareil de production de mousse selon la revendication 7, comprenant en outre:
un châssis de support (30) pour supporter le couvercle de fermeture (21), le bouchon de confinement interne (23) et au moins un panneau de confinement latéral (19);
un ensemble de poutrelles (26, 27) pour supporter le plateau inférieur (20) et les panneaux de confinement latéraux restants (16, 17, 18) de la cellule; et
des moyens de commande (30, 31, 33) pour déplacer ledit ensemble de poutrelles de support (26, 27) entre une position abaissée dans un état ouvert de la cellule de production de mousse et une position élevée dans un état fermé de la cellule de production de mousse.

11. Appareil de production de mousse selon la revendication 7, comprenant en outre:
un châssis (30);
un tambour rotatif (52) supporté en rotation par le châssis (30);
un premier et au moins un second couvercle de fermeture (21) munis chacun d'un bouchon de confinement interne (23) et d'au moins un panneau de confinement latéral (19), attaché au niveau de positions angulairement espacées au tambour rotatif (52);
un ensemble de poutrelles (26, 27) pour supporter le plateau inférieur (20) et les panneaux de confinement latéraux restants (16, 17, 18) de la cellule de production de mousse, ledit ensemble de poutrelles étant verticalement mobile entre une position inférieure dans un état ouvert de la cellule de production de mousse et une position élevée dans un état fermé de la cellule de production de mousse;
des premiers moyens de commande (55) pour déplacer ledit ensemble de poutrelles de support entre les positions inférieure et élevée; et
des seconds moyens de commande (53, 54) pour déplacer par pas le tambour rotatif (52) et positionner de manière sélective chaque couvercle de fermeture (21) avec un bouchon de confinement interne respectif (23) faisant face vers le bas vers le plateau inférieur (20) et les panneaux de confinement latéraux restants (16, 17, 18) de la cellule de production de mousse.

12. Appareil de production de mousse selon la revendication 7, comprenant en outre:
un châssis (30);
un tambour rotatif (52) supporté en rotation par le châssis (30);
une première et au moins une seconde cellule de production de mousse attachées angulairement au tambour rotatif (52), et des moyens (54) pour faire tourner le tambour rotatif (52) et les cellules de production de mousse le long d'un chemin circulaire comprenant une position opérationnelle dans laquelle chaque cellule de production de mousse fait face vers le bas; et
des moyens pour relier chaque cellule de production de mousse, dans la position opérationnelle faisant face vers le bas, à la source de vide (48).

13. Appareil de production de mousse selon les revendications 7 et 12, comprenant en outre:
un premier et au moins un second ensemble de poutrelles (26, 27) pour supporter un plateau inférieur respectif (20) et des panneaux de confinement latéraux respectifs (16, 17, 18) d'une cellule de production de mousse;
des moyens (36') pour verrouiller de manière amovible chaque ensemble de poutrelles (26, 27) au tambour rotatif (52); et
des moyens (55, 56) pour déplacer l'ensemble de poutrelles (26, 27), le plateau inférieur (20) et les panneaux de confinement (16, 17, 18) de chaque cellule de production de mousse, entre une position ouverte inférieure et une position fermée élevée de la cellule de production de mousse.
